# EUROPEAN PATENT APPLICATION

(11) **EP 0 650 251 A2**
(43) Date of publication of application: **26.04.1995**
(21) Application number: 94307752.9
(22) Date of filing: 21.10.1994
(51) Int. Cl.: H02M 7/537, H02M 3/156, H02M 3/335

(54) **Inverter circuits**

(30) Priority: 23.10.1993 GB 9321912
(71) Applicant: NICOTECH LIMITED, Kings Langley, Hertfordshire WD4 8RE (GB)
(72) Inventor: Cornes, Nigel William, N/B Byford, St Paul's Hall, Kings Langley, Hertfordshire WD4 8RE (GB)
(74) Representative: Coles, Graham Frederick

(57) **Abstract**

Current flow in an inductor (7) from an unstabilised DC-voltage source (4,5) is switched on and off by a series-connected FET (8) under control of a latch circuit (10). The circuit (10) switches the FET (8) off in response to the attainment of a predetermined voltage across a resistance (9) in the series circuit, and switches the FET (8) on again in response to individual pulses of a constant-frequency pulse generator (14). Constant power output of the circuit to power a xenon tube (1) for a flashing-beacon is derived from a capacitor (6) that is charged via a diode (13) from the current-backswing of the inductor (7). The latch circuit (10) may alternatively (Figure 3) be switched off from the voltage across a capacitor (24) in a resistance-capacitance circuit connected in parallel with the series FET (8) and inductor (7), a switch device (26) that shunts the capacitor (24) being operated in unison with the switching of the latch circuit (10), to discharge the capacitor (24) in the intervals between conduction of the FET (8).

## Description

This invention relates to inverter circuits of the kind in which switching means is connected in series with inductance across the DC-voltage input terminals of the circuit.

Inverter circuits of this specified kind for converting DC input voltage to higher-voltage AC (or pulse) output are known and find application, for example, in the powering of discharge tubes such as xenon flash-discharge tubes. Xenon flash-discharge tubes are used to produce repetitive short-duration flashes of light for beacon purposes in giving visual alarm or warning of hazard, and in this respect may be used on burglar and fire alarm boxes and may take the place of rotating-mirror beacon devices as used on police, ambulance and fire-service vehicles.

In many applications and potential applications of xenon tubes in this way, the voltage of the available power supply to the inverter circuit is liable to fluctuate significantly. For example, in the case of use on a vehicle having a nominally 12-volt battery, the power supply may well vary from 11 volts under load while the engine is not running, to as much as 16 volts when the engine is running with the battery fully charged. Using an inverter circuit of known form to power a xenon tube in such conditions is generally unsatisfactory since for optimum operation the energising power to the tube is required to be maintained at a particular value, and this cannot be readily achieved with known circuits in those conditions.

It is one of the objects of the present invention to provide a form of inverter circuit of the specified kind, for providing a power output which, within a range of variation of DC-voltage input, is substantially independent of such variation.

According to the present invention an inverter circuit of the specified kind is characterised in that the switching means is arranged to be switched on and off sequentially in accordance with the switching of latching means back and forth between two states, that the latching means is arranged to be switched from a first to a second of its two states in accordance with attainment of a predetermined current flow within the series circuit and then back from its second state to its first state by individual pulses of a pulse train of substantially constant pulse recurrence frequency supplied to the latching means, and that the power output of the circuit is derived from the backswing of current flow in the inductance when the switching means is switched off such that the power output is, within a range of variation of the voltage applied to the circuit across the input terminals, substantially independent of variation of such voltage.

The power output of the inverter circuit is in the form of pulses of current, and these may be supplied from the inductance to charge capacitance. The inductance may be an inductor that is connected to the capacitance, possibly from a tap on the inductor, via a diode, or may be a primary winding of a transformer that has a secondary winding connected via a diode to the capacitance.

The switching means may involve a field-effect transistor (FET) and the gate of such transistor may be connected to the latching means such that the FET conducts to cause current to flow through the inductance only while the latching means is in its first state. Other forms of transistor or other semiconductor device may be used instead of a FET.

The latching means may be a bistable transistor-circuit that involves a pair of transistors each having its collector coupled to the base of the other such that in one state of the bistable circuit both transistors conduct and in the other state both are non-conductive. In this case, the pulses of the pulse train may be applied to the base of a first of the two transistors such as to turn the transistors off and thereby set the bistable circuit to its said first state. Switching of the bistable circuit to its second state in response to the attainment of said predetermined current flow in the series circuit, may then be carried out via a coupling circuit which couples resistance in the series circuit to the base of said first transistor, attainment of the predetermined current flow being sensed in this case from the voltage across the resistance. The coupling circuit may include a third transistor having its base connected to said resistance in the series circuit and its collector to the base of said first transistor such that its emitter-collector path is in parallel with the emitter-collector path of the second transistor of the bistable pair. A temperature-dependent resistance may be connected in the coupling circuit to provide compensation for temperature variations in the base-emitter characteristics of the third transistor.

Attainment of the predetermined current flow in the series circuit may be sensed as indicated above, by responding to voltage across resistance in the series circuit. However, it may instead be sensed by responding to the attainment of a mirroring condition in a current path that is connected in parallel with said series circuit across the DC-voltage input terminals. In this regard, the latching means may be switched from its first to its second state in response to the attainment of a predetermined voltage condition across capacitance that is connected in series with resistance in the parallel path. A switch device may be connected in shunt with this capacitance and arranged to open and close in unison with switching of the latching means from its said first and second states respectively, to facilitate charging and discharging of the shunted capacitance.

The inverter circuit of the present invention may find application in powering a xenon or other flash-discharge tube, for example for the purpose of providing a flashing beacon on a vehicle. As an alternative, however, the circuit may be used to power a continuous-discharge lamp.

An example of an inverter circuit according to the present invention will now be described in the context of the provision of a xenon flashing-beacon, with reference to the accompanying drawings, in which:
Figure 1 is a schematic representation of the xenon flashing-beacon including the inverter circuit of the present invention;
Figure 2 shows the circuitry of the inverter circuit represented schematically in Figure 1; and
Figure 3 illustrates a modification of the inverter circuit of Figure 1.

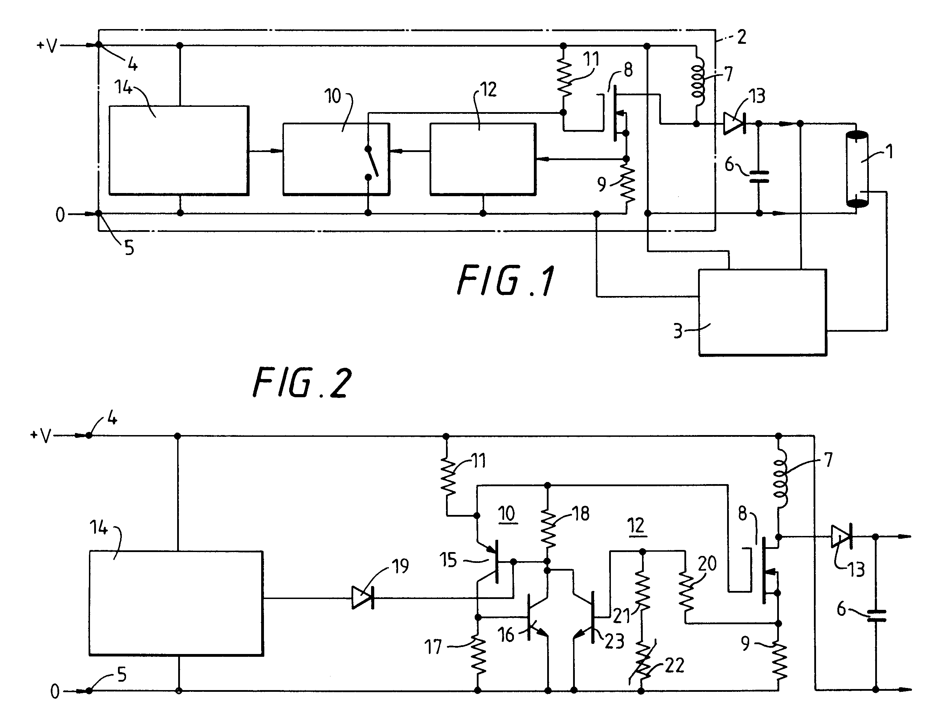

Referring to Figure 1, the beacon includes a xenon tube 1 that is powered from an inverter circuit 2 and is triggered to flash, for example, at a rate of between 60 and 130 times per minute, by a trigger circuit 3. The circuits 2 and 3 are powered from a low-voltage DC power supply, for example a battery of a vehicle, having +V and earth output terminals connected to input terminals 4 and 5, respectively, of the circuit 2.

The output of the inverter circuit 2, for example of 250 volts, is applied to charge a capacitor 6 that is connected across the main-discharge electrodes of the tube 1. Actuation of the trigger circuit 3 to supply a pulse to the trigger electrode of the tube 1 accordingly strikes a flash discharge within the tube 1 during which the charge on the capacitor 6 is dissipated. The capacitor 6 is charged again from the circuit 2 before the next trigger pulse so that such pulse causes a further flash of light from the tube 1. The cycle of charge of the capacitor 6 followed by its discharge in the flash emitted by the tube 1 is repeated in accordance with the succession of trigger pulses applied to the tube 1 by the circuit 3.

If known circuitry were used for the inverter circuit 2, the charging of the capacitor 6 would vary with variation of the voltage applied between the input terminals 4 and 5. However, with circuitry in accordance with the present invention as shown schematically in Figure 1, the output power (dissipated in the tube 1 or other load connected across the capacitor 6) remains substantially independent of variation of the input voltage (the voltage applied across the input terminals 4 and 5) over a wide range of such variation. This allows for optimum operation of the tube 1 to be maintained in spite of variations of the input voltage and variations in value of the capacitor 6 (which value may have a wide initial tolerance and drift with temperature and life). It has been found, for example, that with one form of the inverter circuit illustrated in Figure 1, effective operation of the xenon tube 1 is achieved for any input voltage within the range of 10 to 33 volts.

As illustrated in Figure 1, the inverter circuit includes an inductor 7 and an FET 8 connected in series with one another and a low-value resistor 9 across the terminals 4 and 5, so that current flows through the inductor 7 and resistor 9 only while the FET 8 is conductive. The FET 8 is switched on and off sequentially in accordance with the switching of a latch circuit 10 back and forth between two stable states.

The latch circuit 10, which is connected in series with a resistor 11 across the terminals 4 and 5, is arranged to be switched from a first, off state to a second, on state by a level-detector circuit 12 that is connected to the resistor 9 to be responsive to the attainment of a predetermined current flow through the inductor 7 and FET 8. The gate of the FET 8 is connected to the positive terminal 4 via the resistor 11 so that the FET 8 conducts while the latch circuit 10 is in its off state, but the switching on of the latch circuit 10 draws current via the resistor 11 so as to cause the FET 8 to become non-conductive. Current flow through the FET 8 to the inductor 7 accordingly ceases, and the consequent backswing of current in the inductor 7 charges the capacitor 6 via a diode 13.

The latch circuit 10 is switched back to its off state by individual pulses of a pulse train that is supplied to the latch circuit 10 from a pulse generator 14. The switching off of the circuit 10 in response to each pulse causes the FET 8 to conduct again and supply current to the inductor 7. As the magnitude of current through the FET 8 increases progressively, the voltage across the resistor 9 increases so that eventually the level-detector circuit 12 switches the circuit 10 on again. The switching on of the circuit 10 causes the FET 8 to become non-conductive and results again in transfer of current from the inductor 7 to charge the capacitor 6.

This cycle of building up current flow through the inductor 7 and then transferring the current from the inductor 7 to charge the capacitor 6, is repeated with each successive pulse of the pulse train supplied by the pulse generator 14.

The energy transferred to the capacitor 6 in consequence of each pulse from the generator 14 is:
½LI²
where L is the inductance of the inductor 7 and I is the current in the inductor 7 at the instant the latch circuit 10 is switched on to break current flow through the FET 8. If f represents the pulse recurrence frequency of the pulse generator 14, the power transferred to the capacitor 6, is:
½LI²f
which is independent of the input voltage applied across the terminals 4 and 5.

The output power of the inverter circuit has been found to be substantially independent of variation of input voltage over a wide range of such variation. The extent of variation of the input voltage for which this applies is dependent on the ratings of the circuit components used. It is also dependent on the pulse-recurrence period of the pulse train supplied by the generator 14, in that this period is to be longer than the time taken for the inductor 7 to charge and this charge to be transferred to the capacitor 6; the time taken in this respect is longer the lower the input voltage, and if it exceeds the pulse-recurrence period of the generated pulse train, the constant-power characteristic breaks down.

The circuitry of one form of implementation of the inverter circuit 2 of Figure 1, is shown in Figure 2, and will now be described.

Referring to Figure 2, the latch circuit 10 is formed in this case by a bistable transistor-circuit involving a pair of transistors 15 and 16 having collector-load resistors 17 and 18 respectively. Each transistor 15 and 16 has its collector coupled to the base of the other such that in one state of the bistable circuit both transistors 15 and 16 conduct and in the other state both are non-conductive. Pulses from the generator 14 are supplied to the base of the transistor 15 via a diode 19, to turn the transistor 15, and with it the transistor 16, off and interrupt current flow through the resistor 11.

The interruption of current flow through the resistor 11 turns the FET 8 on causing current flow in the inductor 7 and through the small-value resistor 9. The rise in voltage across the resistor 9 is applied to the level-detector circuit 12 which is formed in this case by three resistors 20 to 22 and a transistor 23 connected with its emitter-collector path in parallel with the emitter-collector path of the transistor 16. As the rise in voltage across the resistor 9 reaches a pre-set value determined by the resistors 20 to 22, so the transistor 23 begins to conduct. This causes the transistor 15, and with it the transistor 16, to conduct, so as to switch the latch circuit 10 to its on state.

The voltage at which the latch circuit 10 switches on, is dependent on the base-emitter voltage parameter V_{be} of the transistor 23. Since this parameter is temperature dependent, steps are taken to compensate for it so that the power output of the inverter circuit shall be as far as possible independent of temperature. To this end, the resistor 22 has a temperature-dependent resistance, and the temperature coefficient of its resistance is such that in relation to the values of the resistors 20 and 21 it effectively cancels out the thermal variation of the parameter V_{be}.

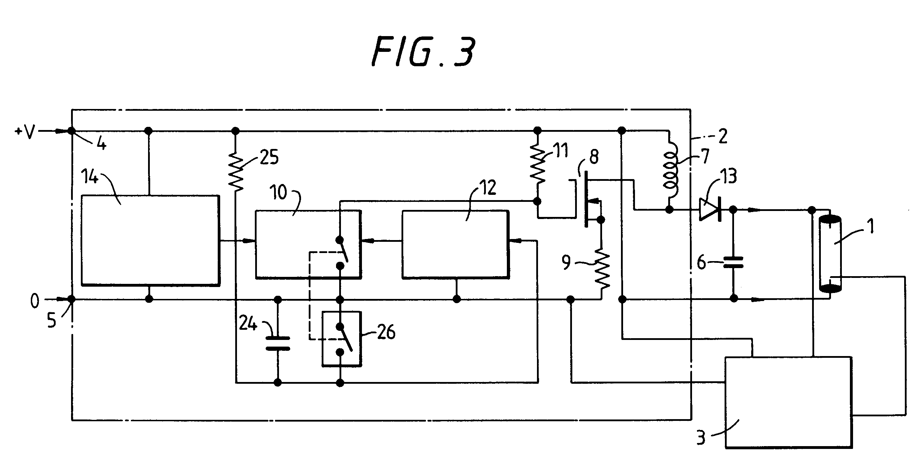

Instead of connecting the latch circuit 10 to be responsive to the voltage across the resistor 9, it may be connected as shown in the modification illustrated in Figure 3, to respond to the voltage across a capacitor 24. As shown in Figure 3, the capacitor 24 is connected in series with a resistor 25 across the input terminals 4 and 5, and is shunted by a switch device 26. The switch device 26, which may involve a FET, is opened and closed in unison with the switching off and on of the latch circuit 10.

The capacitor 24 charges via the resistor 25 while the latch circuit 10 is switched off and the switch device 26 is correspondingly open. When the voltage across the capacitor 24, as detected by the level-detector circuit 12, has risen sufficiently, the latch circuit 10 is switched on, and the consequent closing of the switch device 26 causes the capacitor 24 to be discharged. Once the latch circuit 10 is switched back to its off state, the switch device 26 opens allowing the capacitor 24 to charge again through the resistor 25. Charging is dependent on the input voltage, and with suitable choice of the values of the capacitor 24 and resistor 25, the voltage excursions across the capacitor 24 can mirror those across the resistor 9 to an adequate degree of accuracy for effective operation of the circuit.

## Claims

1. An inverter circuit in which switching means is connected in series with inductance across the DC-voltage input terminals of the circuit, characterised in that the switching means is arranged to be switched on and off sequentially in accordance with the switching of latching means back and forth between two states, that the latching means is arranged to be switched from a first to a second of its two states in accordance with attainment of a predetermined current flow within the series circuit and then back from its second state to its first state by individual pulses of a pulse train of substantially constant pulse recurrence frequency supplied to the latching means, and that the power output of the circuit is derived from the backswing of current flow in the inductance when the switching means is switched off such that the power output is, within a range of variation of the voltage applied to the circuit across the input terminals, substantially independent of variation of such voltage.

2. An inverter circuit according to Claim 1 wherein the power output of the inverter circuit is supplied from the inductance to charge capacitance via a diode.

3. An inverter circuit according to Claim 1 or Claim 2 wherein switching means involves a field-effect transistor having its gate connected to the latching means such that the transistor conducts to cause current to flow through the inductance only while the latching means is in its said first state.

4. An inverter circuit according to any one of Claims 1 to 3 wherein the latching means is a bistable transistor-circuit involving a pair of transistors each having its collector coupled to the base of the other such that in one state of the bistable circuit both transistors conduct and in the other state both are non-conductive.

5. An inverter circuit according to Claim 4 wherein the pulses of the pulse train are applied to the base of a first of the two transistors such as to turn the transistors off and thereby set the bistable circuit to its said first state.

6. An inverter circuit according to Claim 5 wherein the base of said first transistor is coupled to resistance in the series circuit such that the bistable circuit is switched to its said second state in response to the attainment of said predetermined current flow in the series circuit.

7. An inverter circuit according to Claim 6 wherein the coupling of the base of said first transistor to said resistance is via a third transistor, the third transistor having its base connected to said resistance and its collector to the base of said first transistor such that its emitter-collector path is in parallel with the emitter-collector path of the second transistor of the bistable pair.

8. An inverter circuit according to Claim 7 or Claim 8 wherein the coupling between the base of said first transistor and said resistance involves temperature-dependent resistance to provide compensation for temperature variations in the base-emitter characteristics of said third transistor.

9. An inverter circuit according to any one of Claims 1 to 5 wherein it is arranged that attainment of the predetermined current flow in the series circuit is mirrored in the attainment of a predetermined condition in a current path that is connected in parallel with said series circuit across the DC-voltage input terminals, and wherein the latching means is arranged to be switched from its first to its second state in response to the attainment of said condition in the parallel circuit.

10. An inverter circuit according to Claim 9 wherein the latching means is arranged to be switched from its first to its second state in response to attainment of a predetermined voltage condition across capacitance that is connected in series with resistance in the parallel path, and a switch device which shunts this capacitance is arranged to open and close in unison with switching of the latching means from its said first and second states respectively.

11. An inverter circuit according to any one of Claims 1 to 10 having a xenon or other discharge tube connected thereto to be powered thereby.
